# EUROPEAN PATENT APPLICATION

(11) **EP 4 597 414 A1**
(43) Date of publication of application: **06.08.2025**
(21) Application number: 23870379.7
(22) Date of filing: 14.09.2023
(51) Int. Cl.: G06T 5/00

(54) **IMAGE INPAINTING METHOD AND APPARATUS, AND DEVICE, COMPUTER-READABLE STORAGE MEDIUM AND PRODUCT**

(30) Priority: 30.09.2022 CN 202211215127
(71) Applicant: Beijing Zitiao Network Technology Co., Ltd., Beijing 100190 (CN)
(72) Inventor: XU, Nan, Beijing 100028 (CN); RAN, Ran, Beijing 100028 (CN); LI, Binbin, Beijing 100028 (CN); LIU, Yue, Beijing 100028 (CN)
(74) Representative: Marks & Clerk LLP
(86) International application number: PCT/CN2023/118907
(87) International publication number: WO 2024/067145

(57) **Abstract**

Embodiments of the present disclosure provides a method, apparatus, electronic device, computer readable storage medium, computer program product and computer program for image restoration. The method comprises: in response to a selection operation of a user in any region of an image to be restored within an image restoration page, determining a first target region selected by the user; generating, based on the first target region, a first region associated with the first target region, and displaying a predetermined editing page in the image restoration page; in response to editing content input by the user in the editing page, editing the first region based on the editing content to obtain a second region; and performing, based on the second region, an image restoration operation on the image to be restored.

## Description

### CROSS REFERENCING OF RELATED APPLICATION(S)

The present application claims priority of Chinese Patent Application No. 202211215127.6, entitled "METHOD, APPARATUS, DEVICE, COMPUTER READABLE STORAGE MEDIUM AND PRODUCT FOR IMAGE RESTORATION" filed on Sep. 30, 2022, the entirety of which is incorporated herein by reference.

### FIELD

The embodiments of the present disclosure relate to a technical field of image processing, in particular to a method, apparatus, electronic device, computer readable storage medium, computer program product and computer program for image restoration.

### BACKGROUND

With the improvement of hardware performance of a terminal device, applications (APP) running on the terminal device increase, for example, an image processing software(s). A user may perform operations such as editing, restoring and the like on image by using the image processing software.

In an existing image restoration software, when image restoration is performed, a user usually needs to manually adjust a region that needs to be restored, which is often cumbersome to operate and poor in restoring effect.

### SUMMARY

Embodiments of the present disclosure provide a method, apparatus, electronic device, computer readable storage medium, computer program product and computer program for image restoration.

According to a first aspect, an embodiment of the present disclosure provides a method for image restoration, including:
in response to a selection operation of a user in any region of an image to be restored within an image restoration page, determining a first target region selected by the user;
generating, based on the first target region, a first region associated with the first target region, and displaying a predetermined editing page in the image restoration page;
in response to editing content input by the user in the editing page, editing the first region based on the editing content to obtain a second region;
performing, based on the second region, an image restoration operation on the image to be restored.

According to a second aspect, an embodiment of the present disclosure provides an apparatus for image restoration, including:
a determining module, configured for, in response to a selection operation of a user in any region of an image to be restored within an image restoration page, determining a first target region selected by the user;
a processing module, configured for generating, based on the first target region, a first region associated with the first target region, and displaying a predetermined editing page in the image restoration page;
an editing module, configured for, in response to editing content input by the user in the editing page, editing the first region based on the editing content to obtain a second region;
a restoration module, configured for performing, based on the second region, an image restoration operation on the image to be restored.

According to a third aspect, an embodiment of the present disclosure provides an electronic device, including a processor and a memory;
the memory storing a computer executable instruction;
the processor performing the computer executable instruction stored in the memory, which causes the processor to perform the method for image restoration according to the first aspect and various possible designs of the first aspect.

According to a fourth aspect, an embodiment of the present disclosure provides a computer readable storage medium, where the computer readable storage medium stores computer executable instructions, and when performed by a processor, implementing the method for image restoration according to the first aspect and plurality of possible designs of the first aspect.

According to a fifth aspect, an embodiment of the present disclosure provides a computer program product, including a computer program, comprising a computer program, when performed by a processor, implementing the method for image restoration according to the first aspect and various possible designs of the first aspect.

According to a sixth aspect, an embodiment of the present disclosure provides a computer program, when performed by a processor, implementing the method for image restoration according to the first aspect and various possible designs of the first aspect.

According to the method, apparatus, electronic device, computer readable storage medium, computer program product and computer program for image restoration, a first region corresponding to a first target region is generated by determining the first target region selected by the user in the image to be restored, so that a second region can be obtained through the editing operation on the first region, and the image to be restored is restored through the second region.

### BRIEF DESCRIPTION OF THE DRAWINGS

In order to provide a clearer explanation of the technical solutions of embodiments of the present disclosure or technologies in the prior art, a brief introduction will be given below to the accompanying drawings used for describing the embodiments or technologies in the prior art, it is obvious that the accompanying drawings in the following description are some embodiments of the present disclosure. and for those skilled in the art, other accompanying drawings can be obtained based on these accompanying drawings without any creative work.
FIG. 1 is a schematic flowchart of a method for image restoration according to an embodiment of the present disclosure.
FIG. 2 is a schematic diagram of interface interaction according to an embodiment of the present disclosure.
FIG. 3 is a schematic diagram of further interface interaction according to an embodiment of the present disclosure.
FIG. 4 is a schematic flowchart of a method for image restoration according to a further embodiment of the present disclosure.
FIG. 5 is a schematic diagram of further interface interaction according to an embodiment of the present disclosure.
FIG. 6 is a schematic flowchart of a method for image restoration according to a further embodiment of the present disclosure.
FIG. 7 is a schematic flowchart of a method for image restoration according to a further embodiment of the present disclosure.
FIG. 8 is a schematic structural diagram of an apparatus for image restoration according to an embodiment of the present disclosure.
FIG. 9 is a schematic structural diagram of an electronic device according to an embodiment of the present disclosure.

### DETAILED DESCRIPTION

In order to make purposes, technical solutions and advantages of the embodiments of the present disclosure more apparent, the technical solutions in the embodiments of the present disclosure will be described below in a clearly and fully understandable way in combination with the drawings related to the embodiments of the present disclosure. It is obvious that the described embodiments are only a part but not all of the embodiments of the present disclosure. All other embodiments obtained by a person of ordinary skill in the art based on the embodiments of the present disclosure without creative efforts shall belong to the scope of protection of the present disclosure.

To solve the technical problems that the existing methods for image restoration are often complicated to operate and the restoration effect is not good, the present disclosure provides method, apparatus, electronic device, computer readable storage medium, computer program product and computer program for image restoration.

It should be noted that the method, apparatus, electronic device, computer readable storage medium, computer program product and computer program for image restoration provided by the present disclosure may be applied to any application scenario of image restoration.

In the existing method for image restoration, usually a user manually selects a region to be restored, and directly edits the region to achieve a restoration effect. However, when the above method is used for image restoration, the restoration effect is often not good.

In the process of solving the above technical problem, the inventor through research found that: in order to improve the restoration effect of image restoration, based on a region selected by the user in the image to be restored, a first region associated with the region may be generated. A second region is obtained by performing an editing operation on the first region. Further, the image restoration operation may be performed based on the second region. By performing the editing operation on the first region, the obtained second region can better meet the requirements in practice, and then image restoration performed based on the second region can obtain a better restoration effect.

### Embodiment 1

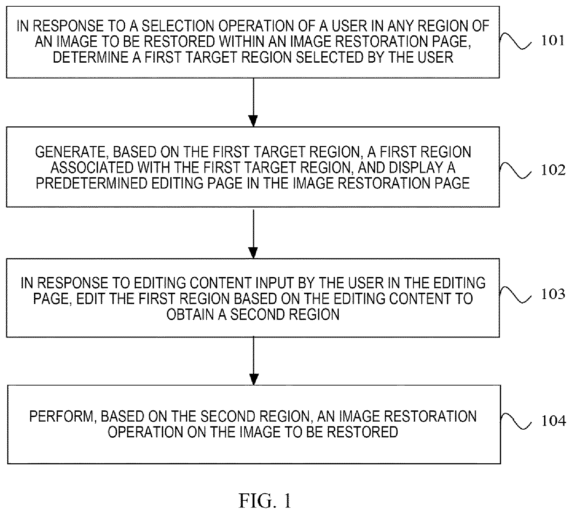

FIG. 1 is a schematic flowchart of a method for image restoration according to an embodiment of the present disclosure. As shown in FIG. 1, the method comprises steps 101 to 104 as described below.

Step 101, in response to a selection operation of a user in any region of an image to be restored within an image restoration page, determine a first target region selected by the user.

In this embodiment, the actor is an apparatus for image restoration, and the apparatus for image restoration may be coupled to a terminal device, so that in response to a trigger operation of the user on the terminal device, the image to be restored may be restored. Alternatively, the apparatus for image restoration may be further coupled to a server, and the server may be communicatively connected to the terminal device, so that a trigger operation of a user sent by the terminal device may be obtained. Furthermore, an image restoration operation may be performed based on the trigger operation, and the restored restoration result is fed back to the terminal device for display.

In this embodiment, when the user needs to perform the image restoration operation, the image restoration page may be entered by triggering a predetermined restoration control. The image restoration page may display an image to be restored.

Further, in the image restoration page, the user may select the first target region to be cloned from the image to be restored based on actual requirements. Specifically, the user may select any region in the image to be restored within the predetermined image restoration page to obtain the first target region.

Alternatively, the first target region may be obtained by performing a smearing operation on any region in the image to be restored by the user. Alternatively, the first target region may be obtained based on a smearing operation that is performed by the user on any region in the image to be restored and an intelligent recognition operation. Alternatively, all the target objects in the image to be restored may be intelligently recognized based on the selection operation triggered by the user, and the selection operation of any target object is performed by the user. A specific selection manner is not limited in the present disclosure.

Step 102, generate, based on the first target region, a first region associated with the first target region, and display a predetermined editing page in the image restoration page.

In this embodiment, after obtaining the first target region selected by the user, in order to facilitate the restoration operation on the image, the first region may be generated based on the first target region. Parameters such as shape and size of the first target region and that of the first region are the same. The first region may be a cloned region generated based on the first target region.

After the first region is generated, the user may perform an editing operation on the first region based on the restoration requirement in practice. Therefore, after the first region is generated, the predetermined editing page may be displayed in the image restoration page. The user may perform an editing operation on the first region based on the editing page.

Alternatively, the display size of the editing page may be less than the image restoration page. The image to be restored, the first target region, and the first region may be displayed in the image restoration page. In order to avoid occlusion of the image to be restored, the editing page may be displayed on the lower side of the image restoration page.

Step 103, in response to editing content input by the user in the editing page, edit the first region based on the editing content to obtain a second region.

In this embodiment, the editing page may specifically include a plurality of editing options, and the user may input the editing content for each editing option which may include a transparency editing option, a feathering option, an erasing option, and the like. For example, the user may input such as the transparency parameter and the feathering parameter as the editing content in the editing page, so that the editing operation may be performed on the first region based on the parameter in the editing content, and after the editing is completed, the second region is obtained. There may be a plurality of second regions. The second region may be a patch region for restoring an image to be restored.

Step 104, perform, based on the second region, an image restoration operation on the image to be restored.

In this embodiment, after obtaining the second region, the image restoration operation may be performed on the image to be restored based on the second region.

For example, the second region may be cover the region to be restored in the image to be restored, or the second region may be used to replace the region to be restored in the image to be restored.

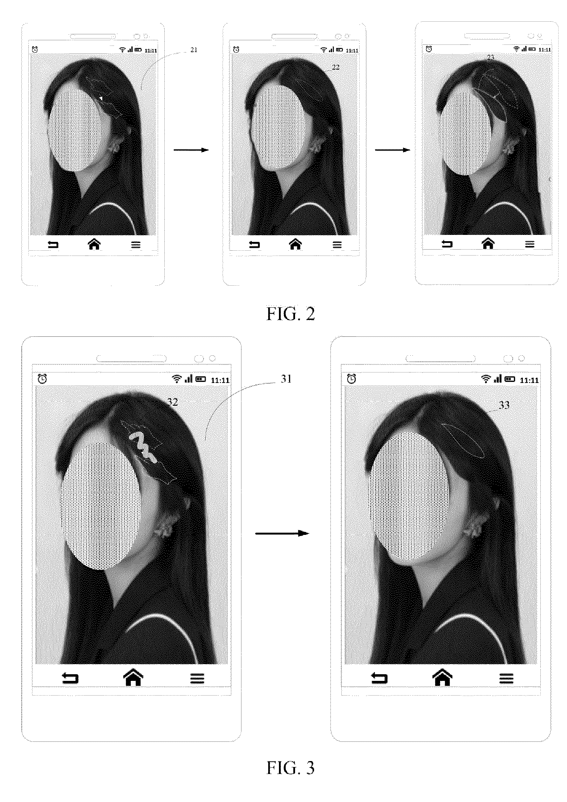

FIG. 2 is a schematic diagram of interface interaction according to an embodiment of the present disclosure, as shown in FIG. 2, the user may perform a selection operation in the image to be restored 21. A first target region 22 is determined in response to the selection operation. A first region 23 associated with the first target region 22 is generated. The first region 23 is the same as the first target region 22.

Further, on the basis of any of the above embodiments, after step 102, the method further comprises:
in response to a movement operation of the user for the first target region, moving the first target region and the first region;
   and/or,
in response to a movement operation of the user for the first region, moving the first region.

In this embodiment, the user may further move the selected first target region or the first region according to actual requirements.

Alternatively, when the user performs a movement operation for the first target region, the first region also moves with the movement operation of the first target region. When the user performs a movement operation for the first region, the first target region does not move. Specifically, in response to a movement operation of the user for the first target region, the first target region and the first region are moved. In response to the user performing a movement operation for the first region, the first region is moved.

Further, on the basis of any of the above embodiments, the image restoration page further includes a comparison control.

After step 103, the method further comprises:
in response to a trigger operation of the user on the comparison control, displaying a first region corresponding to the second region;
in response to the user stopping triggering the comparison control, redisplaying the second region.

In this embodiment, in order to enable the edited second region to fit the personalized requirement of the user and improve the restoration effect, during the editing process, the current second region and the first region may be compared and displayed, so that the user can further edits the second region.

Alternatively, the image restoration page further includes a comparison control. In response to the trigger operation of the user on the comparison control, the first region corresponding to the second region may be displayed, so that enable the user to view the current editing effect. When it is detected that the user stops triggering the comparison control, the second region may be redisplayed, so that enable the user to perform further editing operations on the second region.

According to the method for image restoration provided in this embodiment, the first region corresponding to the first target region is generated by determining the first target region selected by the user in the image to be restored, so that the second region can be obtained by editing the first region, and the image to be restored is restored by using the second region. The efficiency of image restoration operation is improved. And by editing the first region, the second region can be more attached to actual requirements, and the image restoration effect is improved.

### Embodiment 2

In this embodiment, in order to determine the first target region, the region selected by the user in the image to be restored may be directly used as the first target region. Alternatively, the first target region may be determined based on the selection operation and the intelligent recognition operation of the user, or the first target region may be determined in an intelligent recognition manner.

Alternatively, based on any of the above embodiments, Step 101 comprises:
in response to at least one sliding operation of the user on any region of the image to be restored, determining a coverage region corresponding to the sliding operation;
determining the coverage region as the first target region.

In this embodiment, in order to determine the first target region, the region selected by the user in the image to be restored may be directly used as the first target region. Specifically, the user may perform a sliding operation on any region in the image to be restored according to an actual requirement, and select the first target region through the sliding operation. The number of sliding operations may be at least one. Correspondingly, in response to the sliding operation, a coverage region corresponding to the sliding operation may be determined. The coverage region is determined as the first target region.

Further, on the basis of any of the above embodiments, determining a coverage region corresponding to the sliding operation in response to at least one sliding operation of the user on any region in the image to be restored comprises:
determining information of a brush size corresponding to the at least one sliding operation;
determining a sliding trajectory corresponding to the sliding operation;
determining the coverage region based on the sliding trajectory and the brush size.

In this embodiment, the user may select the information of a brush size corresponding to the sliding operation according to the actual requirement. Therefore, in response to the sliding operation of the user in any region in the image to be restored, the sliding trajectory corresponding to the sliding operation is determined. A coverage region corresponding to the sliding operation is determined based on the sliding trajectory and the information of the brush size corresponding to the sliding operation.

According to the method for image restoration provided by the embodiment, the first target region is determined based on the sliding operation of the user on the image to be restored, so that the first target region can better cater to the actual requirement of the user. Thereby, the first region which caters better to the actual requirement of the user can be generated based on the first target region, and the image restoration efficiency and accuracy are improved.

Alternatively, based on any of the above embodiments, Step 101 includes:
in response to at least one sliding operation of the user on any region of the image to be restored, determining a coverage region corresponding to the sliding operation;
identifying a target object corresponding to a position of the coverage region;
determining a region corresponding to the target object as the first target region.

In this embodiment, in order to determine the first target region, the first target region may be determined based on the selection operation of the user and the intelligent recognition operation. Specifically, the user may perform a sliding operation(s) on any region in the image to be restored according to actual requirements, and the number of the sliding operation may be at least one. In response to the user performing at least one sliding operation on any region in the image to be restored, a coverage region corresponding to the sliding operation is determined.

A plurality of target objects may be included in the image to be restored, wherein the target object includes but is not limited to content such as a person, an animal, an object, a sticker, and the like, and the coverage region may not accurately cover the target object. Therefore, the coverage region corresponding to the sliding operation may be determined, and the target object corresponding to the position of the coverage region may be intelligently identified. The target object is determined as a first target region.

FIG. 3 is a schematic diagram of further interface interaction according to an embodiment of the present disclosure. As shown in FIG. 3, the user may perform a sliding operation in the image to be restored 31, and in response to the sliding operation, a coverage region 32 corresponding to the sliding operation is determined. The target object 33 corresponding to the position of the coverage region may be determined as the first target region.

Alternatively, based on any of the above embodiments, Step 101 comprises:
in response to a trigger operation of the user on any region of the image to be restored, determining a trigger position corresponding to the trigger operation;
identifying a target object corresponding to the trigger position;
determining a region corresponding to the target object as the first target region.

In this embodiment, in order to determine the first target region, the first target region may be determined in an intelligent recognition manner. Specifically, the user may select a trigger position by triggering any region in the image to be restored. A target object corresponding to the trigger position is identified. The target object is determined as a first target region.

It should be noted that the recognition operation on the target object may be implemented in any recognition manner, the present disclosure is not limited in this respect.

According to the method for image restoration provided by the embodiment, by intelligently identifying the target object at the trigger position of the user, the first target region is determined based on the target object, so that the convenience of determining the first target region can be improved. The user can obtain the first target region without smearing all the target objects, and the image restoration efficiency is improved.

### Embodiment 3

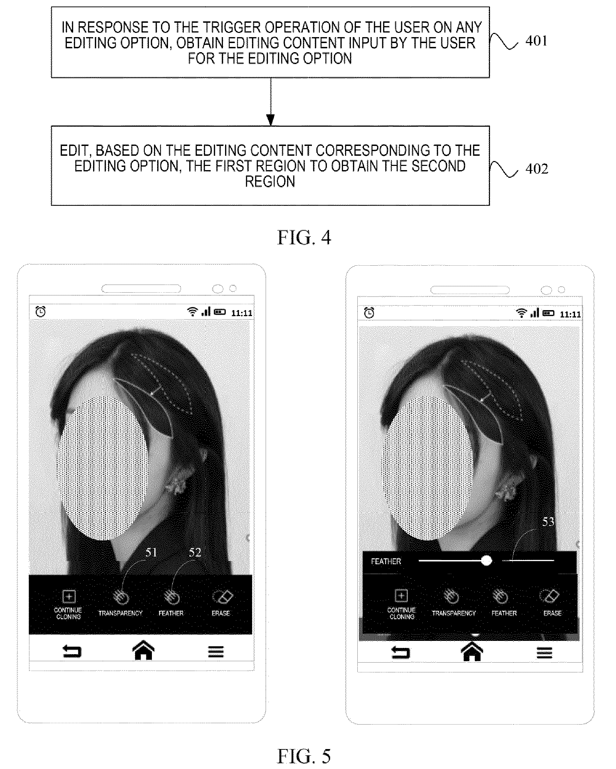

FIG. 4 is a schematic flowchart of a method for image restoration according to a further embodiment of the present disclosure. As shown in FIG. 4, Step 103 comprises:
Step 401, in response to a trigger operation of the user on any editing option, obtain editing content input by the user for the editing option.
Step 402, edit, based on the editing content corresponding to the editing option, the first region to obtain the second region.

In this embodiment, the editing page may specifically include a plurality of editing options, and the user may input the editing content for each editing option which may include a transparency editing option, a feathering option, an erasing option, and the like. For example, the user may input such as the transparency parameter and the feathering parameter as the editing content in the editing page, so that the editing operation may be performed on the first region according to the parameter in the editing content. Correspondingly, the editing content input by the user for the editing option may be obtained in response to the trigger operation of the user on any editing option. The editing operation is performed on the first region based on the editing content corresponding to the editing option to obtain the second region.

According to the method for image restoration provided by the embodiment, by setting the plurality of editing options, the editing operation is performed on the first region based on the editing content corresponding to the plurality of editing options, so that the second region which better fits the actual requirement of the user can be obtained, and the generated second region has a better restoring effect.

Alternatively, based on any of the above embodiments, when the editing option is a transparency editing option or a feathering option, Step 401 comprises:
in response to a trigger operation of the user on the transparency editing option or the feathering option, displaying a parameter adjustment control corresponding to the transparency editing option or the feathering option;
in response to an adjustment operation of the user on the parameter adjustment control, determining a target adjustment parameter, and determining the target adjustment parameter as the editing content corresponding to the editing option.

Step 402 comprises:
performing, based on the target adjustment parameter, transparency adjustment or feathering degree adjustment on the first region to obtain the second region.

In this embodiment, when the editing option is the transparency editing option or the feathering option, the user may input the content such as the transparency parameter and the feathering parameter in the editing page as the editing content.

Specifically, in response to a trigger operation of the user on the transparency editing option or the feathering option, a parameter adjustment control corresponding to the transparency editing option or the feathering option is displayed. The user may determine a target adjustment parameter through an adjustment operation of the user on the parameter adjustment control, and the target adjustment parameter is determined as the editing content corresponding to the editing option. For example, the user may adjust the feathering parameter to 59 by performing the adjustment operation of the parameter adjustment control.

After the editing content corresponding to the editing option is determined, transparency adjustment or feathering degree adjustment may be performed on the first region based on the target adjustment parameter in the editing content to obtain the second region.

FIG. 5 is a schematic diagram of further interface interaction according to an embodiment of the present disclosure. As shown in FIG. 5, when the editing option is a transparency editing option or a feathering option, in response to a trigger operation of the user on the transparency editing option 51 or the feathering option 52, a parameter adjustment control 53 corresponding to the transparency editing option or the feathering option is displayed. The user may adjust the parameter adjustment control 53 to obtain the target adjustment parameter determination.

According to the method for image restoration provided by the embodiment, the transparency or feathering degree of the first region is adjusted, so that the second region can achieve a better restoration effect, and the image restoration efficiency and accuracy are improved.

Alternatively, based on any of the above embodiments, when the editing option is an erasing option, Step 401 comprises:
in response to a trigger operation of the user on the erasing option, displaying a predetermined stroke size adjustment control;
obtaining a target stroke size input by the user by triggering the stroke size adjustment control, and obtaining an erasing trajectory triggered by the user in the first region;
determining, based on the target stroke size and the erasing trajectory, a region to be erased and determining the region to be erased as the editing content.

Step 402 comprises:
performing an erasing operation on a position where the first region coincides with the region to be erased, to obtain the second region.

In this embodiment, the editing option further includes an erasing option, and when the shape of the second region does not meet the requirement in practice, the erasing operation may be performed on the second region by triggering the erasing option.

Alternatively, in response to a trigger operation of the user on the erasing option, a predetermined stroke size adjustment control is displayed, and the stroke size adjustment control is adjusted to determine the target stroke size corresponding to the erasing operation. The target stroke size input is obtained by the user by triggering the stroke size adjustment control. An erasing trajectory triggered by the user in the first region is obtained. The region to be erased is determined based on the target stroke size and the erasing trajectory, and the region to be erased is determined as the editing content. Further, an erasing operation may be performed on a position where the first region coincides with the region to be erased to obtain the second region.

According to the method for image restoration provided by the embodiment, the second region is obtained by performing an erasing operation on the first region, so that the second region better fits the region to be restored, and thus better restoring effect can be achieved.

Alternatively, on the basis of any of the above embodiments, the editing page comprises a continuing cloning option. After Step 102, the method further comprises:
in response to a trigger operation of the user on the continuing cloning option, displaying a region selection page comprising the image to be restored and a predetermined prompt control, and the prompt control is configured for prompting the user to select a target region from the image to be restored;
in response to a selection operation of the user on any region in the image to be restored, determining a second target region selected by the user, and generating a first region associated with the second target region;
determining the first region associated with the first target region and the first region associated with the second target region as a current first region.

In this embodiment, after obtaining a first region, a clone operation may be further generated. Specifically, the editing page further includes a continuing cloning option.

Alternatively, a further first region may be selected based on the continuing cloning option. In response to a trigger operation of the user on the continuing cloning option, a region selection page comprising the image to be restored and a predetermined prompt control is displayed. The prompt control is configured for prompting the user to select a target region from the image to be restored. The user may select an arbitrary region in the image to be restored based on the image restoration requirement, and in response to the selection operation, a second target region selected by the user may be determined, and a first region associated with the second target region may be generated. The first region associated with the first target region and the first region associated with the second target region are determined as the current first region.

Alternatively, a first region that is the same as the first region may also be cloned by triggering the continuing cloning option.

According to the method for image restoration provided by the embodiment, by triggering the continuing cloning option, the new first region can be added on the basis of the first region. The operation is convenient, the image restoration efficiency is improved, and the user experience is improved.

### Embodiment 4

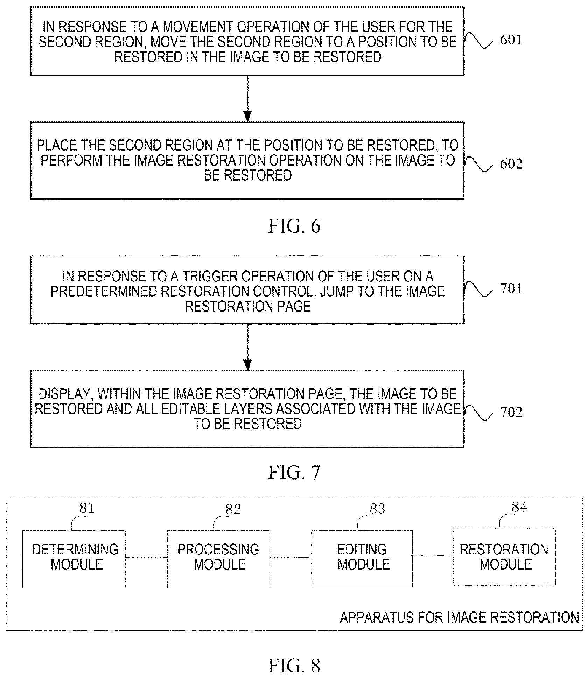

FIG. 6 is a schematic flowchart of a method for image restoration according to a further embodiment of the present disclosure.

Step 601, in response to a movement operation of the user for the second region, move the second region to a position to be restored in the image to be restored.

Step 602, place the second region at the position to be restored, to perform the image restoration operation on the image to be restored.

In this embodiment, the second region may be used to cover the region to be restored in the image to be restored, to implement the restoration operation of the image to be restored. Specifically, the second region may be moved to the position to be restored in the image to be restored in response to the movement operation by the user for the second region. Alternatively, the user may implement the movement operation by dragging the second region. Alternatively, the coordinate information of the position to be restored may be input, to implement the movement operation for the second region. Alternatively, the second region may be moved to the position to be restored by triggering the position to be restored. This is not limited in the present disclosure. Further, the second region may be covered at a position to be restored, to implement a restoration operation on the image to be restored.

According to the method for image restoration provided by the embodiment, after the second region is obtained, the second region is moved to the position to be restored, so that the image to be restored can be accurately restored, and the image restoration accuracy is improved. In addition, through the simple movement operation, the restoration operation of the image to be restored can be implemented. The operation is convenient, and the image restoration efficiency is improved.

### Example 5

FIG. 7 is a schematic flowchart of a method for image restoration according to a further embodiment of the present disclosure.

Step 701, in response to a trigger operation of the user on a predetermined restoration control, jump to the image restoration page;

Step 702, display, within the image restoration page, the image to be restored and all editable layers associated with the image to be restored.

In this embodiment, before the image to be restored is restored, a plurality of editing operations may be performed on the image to be restored in advance, for example, operations such as adding filters, adding stickers, image beautification, and the like. In order to obtain a better image editing effect, a plurality of layers may be set, and different editing operations may be performed on different layers.

Therefore, during the process of restoring an image, in order to ensure the effect of image restoration, a non-editable layer is hidden, and an editable layer is displayed, so that the user performs an image editing operation on the editable layer. Alternatively, a restoration control may be preset, and in response to a trigger operation of the user on the preset restoration control, the restoration control will jump to the image restoration page. An image to be restored and all editable layers associated with the image to be restored are displayed within the image restoration page.

Further, on the basis of any of the above embodiments, after Step 802, the method further comprises:
in response to a trigger operation of the user within the image restoration page, displaying the image to be restored and all layers associated with the image to be restored within the image restoration page.

In this embodiment, the user may also view the currently hidden layer according to actual requirements. Specifically, in response to a trigger operation of the user within the image restoration page, an image to be restored and all layers associated with the image to be restored may be displayed within the image restoration page. The entire layer includes editable layers and editable layers. The predetermined trigger operation may specifically be a long-press operation, a double-click operation, a predetermined gesture, or the like.

According to the method for image restoration provided by the embodiment, the non-editable is hidden and redisplayed based on the trigger operation of the user, on one hand, the image restoration effect can be ensured, and on the other hand, the image restoration process can better attach to the personalized requirement of the user.

### Example 6

FIG. 8 is a schematic structural diagram of an apparatus for image restoration according to an embodiment of the present disclosure. As shown in FIG. 8, the apparatus comprises: a determining module 81, a processing module 82, an editing module 83, and a restoration module 84. The determining module 81 is configured for, in response to a selection operation of a user in any region of an image to be restored within an image restoration page, determining a first target region selected by the user; the processing module 82 is configured for generating, based on the first target region, a first region associated with the first target region, and displaying a predetermined editing page in the image restoration page; and the editing module 83 is configured for, in response to editing content input by the user in the editing page, editing the first region based on the editing content to obtain a second region. The restoration module 84 is configured for performing, based on the second region, an image restoration operation on the image to be restored.

Further, on the basis of any of the above embodiments, the apparatus further comprises: a first moving module, configured to move the first target region and the first region in response to a movement operation of the user for the first target region. And/or, a second moving module is configured to move the first region in response to a movement operation of the user for the first region.

Further, on the basis of any of the above embodiments, the image restoration page further comprises a comparison control. The apparatus further comprises: a comparing module, configured to display a first region corresponding to the second region in response to a trigger operation of the user on the comparison control. A displaying module is further configured to redisplay the second region in response to the user stopping triggering the comparison control.

Further, on the basis of any of the above embodiments, the determining module is configured to: in response to the at least one sliding operation of the user on any region of the image to be restored, determine a coverage region corresponding to the sliding operation, and determine the coverage region as the first target region.

Further, on the basis of any of the above embodiments, the determining module is configured for:
determining information of a brush size corresponding to the at least one sliding operation;
determining a sliding trajectory corresponding to the sliding operation;
determining the coverage region based on the sliding trajectory and the brush size.

Further, on the basis of any of the above embodiments, the determining module is configured to: in response to the at least one sliding operation of the user on any region of the image to be restored, determine a coverage region corresponding to the sliding operation, identify a target object corresponding to a position of the coverage region, and determine a region corresponding to the target object as the first target region.

Further, on the basis of any of the above embodiments, the determining module is configured to: in response to a trigger operation of a user on any region of the image to be restored, determine a trigger position corresponding to the trigger operation, identify a target object corresponding to the trigger position, and determine a region corresponding to the target object as the first target region.

Further, on the basis of any of the above embodiments, the editing page includes at least one editing option. The editing module is configured for: in response to a trigger operation of the user on any editing option, obtaining editing content input by the user for the editing option; and editing, based on the editing content corresponding to the editing option, the first region to obtain the second region.

Further, on the basis of any of the above embodiments, the at least one editing option comprises at least one of a transparency editing option, a feathering option, or an erasing option.

Further, on the basis of any of the above embodiments, if the editing option is a transparency editing option or a feathering option, the editing module is configured for: in response to a trigger operation of the user on the transparency editing option or the feathering option, displaying a parameter adjustment control corresponding to the transparency editing option or the feathering option; and in response to an adjustment operation of the user on the parameter adjustment control, determining a target adjustment parameter, and determining the target adjustment parameter as the editing content corresponding to the editing option. The editing module is configured to perform, based on the target adjustment parameter, transparency adjustment or feathering degree adjustment on the first region to obtain the second region.

Further, on the basis of any of the above embodiments, if the editing option is an erasing option, the editing module is configured for: in response to a trigger operation of the user on the erasing option, displaying a predetermined stroke size adjustment control; obtaining a target stroke size input by the user by triggering the stroke size adjustment control, and obtaining an erasing trajectory triggered by the user in the first region; and determining, based on the target stroke size and the erasing trajectory, a region to be erased and determining the region to be erased as the editing content. The editing module is configured to perform an erasing operation on a position where the first region coincides with the region to be erased to obtain the second region.

Further, on the basis of any of the above embodiments, the editing page comprises a continuing cloning option. The apparatus further comprises: a displaying module, configure for, in response to a trigger operation of the user on the continuing cloning option, displaying a region selection page comprising the image to be restored and a predetermined prompt control, and the prompt control is configured for prompting the user to select a target region from the image to be restored; a selecting module, configured for, in response to a selection operation of the user on any region in the image to be restored, determining a second target region selected by the user, and generating a first region associated with the second target region; and a determining module, further configured for determining the first region associated with the first target region and the first region associated with the second target region as a current first region.

Further, on the basis of any of the above embodiments, the restoration module is configured to: in response to a movement operation of a user for the second region, move the second region to a position to be restored in the image to be restored; and place the second region at the position to be restored, to perform the image restoration operation on the image to be restored.

Further, on the basis of any of the above embodiments, the apparatus further comprises: a jumping module, configured to in response to a trigger operation of the user on a predetermined restoration control, jump to the image restoration page; and a displaying module, configured to display, within the image restoration page, the image to be restored and all editable layers associated with the image to be restored.

Further, on the basis of one of the above embodiments, the apparatus further comprises: a displaying module, configured to display, within the image restoration page, the image to be restored and all layers associated with the image to be restored in response to a trigger operation of the user within the image restoration page.

The device provided in this embodiment may be configured to perform the technical solutions in the above method embodiments, and implementing principles and technical effects thereof are similar, and details are not described herein again in this embodiment.

In order to implement the above embodiments, an embodiment of the present disclosure further provides an electronic device including a processor and a memory. The memory stores a computer executable instruction.

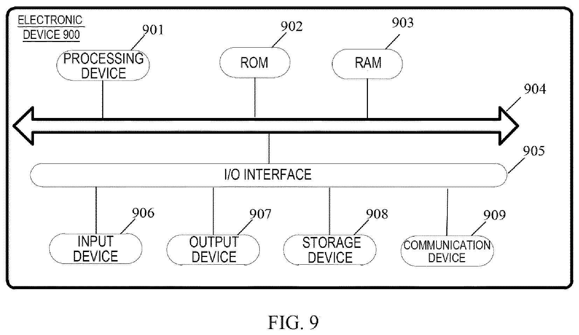

FIG. 9 is a schematic structural diagram of an electronic device according to an embodiment of the present disclosure. As shown in FIG. 9, the electronic device 900 may be a terminal device or a server. The terminal device may include, but is not limited to, a mobile terminal such as a mobile phone, a laptop computer, a digital broadcast receiver, a personal digital assistant (PDA), a portable android device (PAD), a portable media player (PMP), a vehicle-mounted terminal (for example, a vehicle-mounted navigation terminal), and the like, and a fixed terminal such as a digital TV, a desktop computer, and the like. The electronic device shown in FIG. 9 is merely an example and should not cast any limitation to the functions and scope of use of the embodiments of the present disclosure.

As shown in FIG. 9, the electronic device 900 may include a processing device (e.g., a central processing unit, a graphics processing unit, etc.) 901 that may perform various suitable actions and processes in accordance with a program stored in a read only memory (ROM) 902 or a program loaded into a random access memory (RAM) 903 from a storage device 908. Various programs and data required for the operation of the electronic device 900 are also stored in the RAM 903. The processing device 901, the ROM 902, and the RAM 903 are connected to each other via a bus 904. An input/output (I/O) interface 905 is also connected to the bus 904.

In general, the following device may be connected to the I/O interface 905: an input device 906 including, for example, a touchscreen, a touchpad, a keyboard, a mouse, a camera, a microphone, an accelerometer, a gyroscope, or the like; an output device 907 including, for example, a liquid crystal display (LCD), a speaker, a vibrator, or the like; a storage device 908 including, for example, a magnetic tape, a hard disk, or the like; and a communication device 909. The communication device 909 may enable the electronic device 900 to wirelessly or wired communicate with other devices so as to exchange data. Although FIG. 9 shows the electronic device 900 comprising various devices, it should be understood that it is not required that all of the devices shown in the figure shall be implemented or equipped. More or fewer devices may be alternatively implemented or equipped.

In particular, in accordance with embodiments of the present disclosure, the processes described above with reference to the flowcharts may be implemented as a computer software program. For example, embodiments of the present disclosure include a computer program product comprising a computer program carried on a computer readable medium. The computer program comprises program code for executing the method as shown in the flowchart. In such an embodiment, the computer program may be downloaded and installed from the network via the communication device 909, or installed from storage device 908, or installed from ROM 902. When the computer program is executed by the processing device 901, the above-described functions defined in the method of embodiments of the present disclosure are executed.

It should be noted that the computer readable medium in the present disclosure may be a computer readable signal medium or a computer readable storage medium, or any combination thereof. A computer-readable storage medium may be, for example, but not limited to, an electronic, magnetic, optical, electromagnetic, infrared, or semiconductor system, apparatus, or device, or any suitable combination thereof. More specific examples of the computer readable storage medium may include, but are not limited to, an electrical connection having one or more wires, a portable computer diskette, a hard disk, a random access memory (RAM), a read-only memory (ROM), an erasable programmable read-only memory (EPROM, or a flash memory), an optical fiber, a compact disc read only memory (CD-ROM), an optical storage device, a magnetic storage device, or any suitable combination of the foregoing. In the present disclosure, a computer readable storage medium may be any tangible medium that may contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may also be any computer readable medium that is not a computer readable storage medium and that may communicate, propagate, or transport a program for use by or in connection with an instruction execution system, apparatus, or device. Program code embodied on a computer readable medium may be transmitted using any appropriate medium, including, but not limited to, wireline, optical fiber cable, Radio Frequency (RF), etc., or any suitable combination of the foregoing.

An embodiment of the present disclosure further provides a computer readable storage medium, where the computer-readable storage medium stores compute -executable instructions, and when performed by a processor, implementing the method for image restoration according to any of the above embodiments.

An embodiment of the present disclosure further provides a computer program product, including a computer program, when performed by a processor, i implementing the method for image restoration according to any of the above embodiments.

An embodiment of the present disclosure further provides a computer program, when performed by a processor, implementing the method for image restoration according to any of the above embodiments.

The computer readable medium may be included in the electronic device, or may exist separately and not be installed in the electronic device.

The computer readable medium carries one or more programs which when being executed by the electronic device, cause the electronic device to execute the method illustrated in the above-mentioned embodiments.

Computer program code for carrying out operations for aspects of the present disclosure may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

The unit(s) involved in the embodiments of the present disclosure may be implemented through software or hardware. The name of a unit does not constitute a limitation to the unit itself in some cases, for example, the first acquisition unit may also be described as "unit to acquire at least two internet protocol addresses".

The functions described herein above may be performed, at least in part, by one or more hardware logic components. For example, without limitation, exemplary types of hardware logic components that may be used include Field-programmable Gate Arrays (FPGAs), Application Specific Integrated Circuits (ASICs), Application Specific Standard Part (ASSPs), System-On-chip systems (SOCs), Complex Programmable Logic Devices (CPLDs), etc.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the foregoing.

In a first aspect, according to one or more embodiments of the present disclosure, a method for image restoration is provided, comprising:
in response to a selection operation of a user in any region of an image to be restored within an image restoration page, determining a first target region selected by the user;
generating, based on the first target region, a first region associated with the first target region, and displaying a predetermined editing page in the image restoration page;
in response to editing content input by the user in the editing page, editing the first region based on the editing content to obtain a second region;
performing, based on the second region, an image restoration operation on the image to be restored.

According to one or more embodiments of the present disclosure, determining the first target region selected by the user in response to a selection operation of the user in any region of the image to be restored within the image restoration page comprises:
in response to at least one sliding operation of the user on any region of the image to be restored, determining a coverage region corresponding to the sliding operation;
determining the coverage region as the first target region.

According to one or more embodiments of the present disclosure, determining the coverage region corresponding to the sliding operation in response to the at least one sliding operation of the user on any region of the image to be restored comprises:
determining information of a brush size corresponding to the at least one sliding operation;
determining a sliding trajectory corresponding to the sliding operation;
determining the coverage region based on the sliding trajectory and the brush size.

According to one or more embodiments of the present disclosure, determining the first target region selected by the user in response to the selection operation of the user in any region of the image to be restored within the image restoration page comprises:
in response to at least one sliding operation of the user on any region of the image to be restored, determining a coverage region corresponding to the sliding operation;
identifying a target object corresponding to a position of the coverage region;
determining a region corresponding to the target object as the first target region.

According to one or more embodiments of the present disclosure, determining the first target region selected by the user in response to the selection operation of the user in any region of the image to be restored within the image restoration page comprises:
in response to a trigger operation of the user on any region of the image to be restored, determining a trigger position corresponding to the trigger operation;
identifying a target object corresponding to the trigger position;
determining a region corresponding to the target object as the first target region.

According to one or more embodiments of the present disclosure, the editing page comprises at least one editing option;
in response to editing content input by the user in the editing page, editing the first region based on the editing content to obtain a second region comprises:
in response to a trigger operation of the user on any editing option, obtaining editing content input by the user for the editing option;
editing, based on the editing content corresponding to the editing option, the first region to obtain the second region.

According to one or more embodiments of the present disclosure, the at least one editing option comprises at least one of: a transparency editing option, a feathering option, or an erasing option.

According to one or more embodiments of the present disclosure, if the editing option is a transparency editing option or a feathering option, obtaining the editing content input by the user for the editing option in response to the trigger operation of the user on any editing option comprises:
in response to a trigger operation of the user on the transparency editing option or the feathering option, displaying a parameter adjustment control corresponding to the transparency editing option or the feathering option;
in response to an adjustment operation of the user on the parameter adjustment control, determining a target adjustment parameter, and determining the target adjustment parameter as the editing content corresponding to the editing option;
editing, based on the editing content corresponding to the editing option, the first region to obtain the second region comprises:
   performing, based on the target adjustment parameter, transparency adjustment or feathering degree adjustment on the first region to obtain the second region.

According to one or more embodiments of the present disclosure, if the editing option is an erasing option, obtaining the editing content input by the user for the editing option in response to the trigger operation of the user on any editing option comprises:
in response to a trigger operation of the user on the erasing option, displaying a predetermined stroke size adjustment control;
obtaining a target stroke size input by the user by triggering the stroke size adjustment control, and obtaining an erasing trajectory triggered by the user in the first region;
determining, based on the target stroke size and the erasing trajectory, a region to be erased and determining the region to be erased as the editing content;
editing, based on the editing content corresponding to the editing option, the first region to obtain the second region comprises:
   performing an erasing operation on a position where the first region coincides with the region to be erased, to obtain the second region.

According to one or more embodiments of the present disclosure, the editing page comprises a continuing cloning option;
after generating, based on the first target region, the first region associated with the first target region, the method further comprises:
in response to a trigger operation of the user on the continuing cloning option, displaying a region selection page comprising the image to be restored and a predetermined prompt control, and the prompt control is configured for prompting the user to select a target region from the image to be restored;
in response to a selection operation of the user on any region in the image to be restored, determining a second target region selected by the user, and generating a first region associated with the second target region;
determining the first region associated with the first target region and the first region associated with the second target region as a current first region.

According to one or more embodiments of the present disclosure, performing, based on the second region, the image restoration operation on the image to be restored comprises:
in response to a movement operation of the user for the second region, moving the second region to a position to be restored in the image to be restored;
placing the second region at the position to be restored, to perform the image restoration operation on the image to be restored.

According to one or more embodiments of the present disclosure, after generating a first region associated with the first target region according to the first target region, the method further comprises:
in response to a movement operation of the user for the first target region, moving the first target region and the first region;
and/or in response to a movement operation of the user for the first region, moving the first region.

According to one or more embodiments of the present disclosure, the image restoration page further comprises a comparison control.
in response to editing content input by the user in the editing page, after editing the first region based on the editing content to obtain a second region further comprises:
in response to a trigger operation of the user on the comparison control, displaying a first region corresponding to the second region;
in response to the user stopping triggering the comparison control, redisplaying the second region.

According to one or more embodiments of the present disclosure, before determining the first target region selected by the user in response to the selection operation of the user in any region of the image to be restored within the image restoration page, the method further comprises:
in response to a trigger operation of the user on a predetermined restoration control, jumping to the image restoration page;
displaying, within the image restoration page, the image to be restored and all editable layers associated with the image to be restored.

According to one or more embodiments of the present disclosure, after displaying the image to be restored and all editable layers associated with the image to be restored in the image restoration page, the method further comprises:
in response to a predetermined trigger operation of the user within the image restoration page, displaying, within the image restoration page, the image to be restored and all layers associated with the image to be restored.

In a second aspect, according to one or more embodiments of the present disclosure, a device for image restoration is provided including:
a determining module, configured for, in response to a selection operation of a user in any region of an image to be restored within an image restoration page, determining a first target region selected by the user;
a processing module, configured for generating, based on the first target region, a first region associated with the first target region, and displaying a predetermined editing page in the image restoration page;
an editing module, configured for, in response to editing content input by the user in the editing page, editing the first region based on the editing content to obtain a second region;
a restoration module, configured for performing, based on the second region, an image restoration operation on the image to be restored.

According to one or more embodiments of the present disclosure, the determining module is configured for:
in response to at least one sliding operation of the user on any region of the image to be restored, determining a coverage region corresponding to the sliding operation;
determining the coverage region as the first target region.

According to one or more embodiments of the present disclosure, the determining module is configured for:
determining information of a brush size corresponding to the at least one sliding operation;
determining a sliding trajectory corresponding to the sliding operation;
determining the coverage region based on the sliding trajectory and the brush size.

According to one or more embodiments of the present disclosure, the determining module is configured for:
in response to at least one sliding operation of the user on any region of the image to be restored, determining a coverage region corresponding to the sliding operation;
identifying a target object corresponding to a position of the coverage region;
determining a region corresponding to the target object as the first target region.

According to one or more embodiments of the present disclosure, the determining module is configured for:
in response to a trigger operation of the user on any region of the image to be restored, determining a trigger position corresponding to the trigger operation;
identifying a target object corresponding to the trigger position;
determining a region corresponding to the target object as the first target region.

According to one or more embodiments of the present disclosure, the editing page includes at least one editing option;

The editing module is configured for:
in response to a trigger operation of the user on any editing option, obtaining editing content input by the user for the editing option;
editing, based on the editing content corresponding to the editing option, the first region to obtain the second region.

According to one or more embodiments of the present disclosure, the at least one editing option includes at least one of a transparency editing option, a feathering option, or an erasing option.

According to one or more embodiments of the present disclosure, if the editing option is a transparency editing option or a feathering option, the editing module is configured for:
in response to a trigger operation of the user on the transparency editing option or the feathering option, displaying a parameter adjustment control corresponding to the transparency editing option or the feathering option;
in response to an adjustment operation of the user on the parameter adjustment control, determining a target adjustment parameter, and determining the target adjustment parameter as the editing content corresponding to the editing option;
the editing module is configured for:
   performing, based on the target adjustment parameter, transparency adjustment or feathering degree adjustment on the first region to obtain the second region.

According to one or more embodiments of the present disclosure, if the editing option is an erasing option, the editing module is configured for:
in response to a trigger operation of the user on the erasing option, displaying a predetermined stroke size adjustment control;
obtaining a target stroke size input by the user by triggering the stroke size adjustment control, and obtaining an erasing trajectory triggered by the user in the first region;
determining, based on the target stroke size and the erasing trajectory, a region to be erased and determining the region to be erased as the editing content;
the editing module is configured for:
   performing an erasing operation on a position where the first region coincides with the region to be erased to obtain the second region.

According to one or more embodiments of the present disclosure, the editing page includes a continuing cloning option;
the apparatus further includes:
a displaying module, configured for, in response to a trigger operation of the user on the continuing cloning option, displaying a region selection page comprising the image to be restored and a predetermined prompt control, and the prompt control is configured for prompting the user to select a target region from the image to be restored;
a selecting module, configured for, in response to a selection operation of the user on any region in the image to be restored, determining a second target region selected by the user, and generating a first region associated with the second target region;
a determining module, further configured for determining a first region associated with the first target region and a first region associated with the second target region as a current first region.

According to one or more embodiments of the present disclosure, the restoration module is configured for:
in response to a movement operation of the user for the second region, moving the second region to a position to be restored in the image to be restored;
placing the second region at the position to be restored, to perform the image restoration operation on the image to be restored.

According to one or more embodiments of the present disclosure, the apparatus further includes:
a first moving module, configured for, in response to a movement operation of the user for the first target region, moving the first target region and the first region;
and/or, a second moving module, configured for moving the first region in response to a movement operation of the user for the first region.

According to one or more embodiments of the present disclosure, the image restoration page further includes a comparison control;
the apparatus further includes:
a comparing module, configured for, in response to a trigger operation of the user on the comparison control, displaying a first region corresponding to the second region;
a displaying module, further configured for, in response to the user stopping triggering the comparison control, redisplaying the second region.

According to one or more embodiments of the present disclosure, the apparatus further includes:
a jumping module, configured for, in response to a trigger operation of the user on a predetermined restoration control, jumping to the image restoration page;
a displaying module, further configured for displaying, within the image restoration page, the image to be restored and all editable layers associated with the image to be restored.

According to one or more embodiments of the present disclosure, the apparatus further includes:
a displaying module, further configured for displaying the image to be restored and all layers associated with the image to be restored within the image restoration page in response to a trigger operation of the user within the image restoration page.

According to one or more embodiments of the present disclosure,
in a third aspect, according to one or more embodiments of the present disclosure, there is provided an electronic device comprising at least one processor and a memory;
the memory stores computer executable instructions;
the at least one processor executes the computer executable instructions stored in the memory, so that the at least one processor executes a method for image restoration in accordance with the first aspect and various possible designs of the first aspect.

In a fourth aspect, according to one or more embodiments of the present disclosure, there is provided a computer readable storage medium with computer executable instructions stored thereon. The computer executable instructions, when being executed by a processor, implement a method for image restoration in accordance with the first aspect and various possible designs of the first aspect.

In a fifth aspect, according to one or more embodiments of the present disclosure, there is provided a computer program product comprising a computer program. The computer program, when being executed by a processor, implements a method for image restoration in accordance with the first aspect and various possible designs of the first aspect.

According to a sixth aspect, according to one or more embodiments of the present disclosure, there is provided a computer program. The computer program, when being executed by a processor, implements a method for image restoration in accordance with the first aspect and various possible designs of the first aspect.

The foregoing description is merely illustrative of the preferred embodiments of the present disclosure and of the technical principles applied thereto, as will be appreciated by those skilled in the art. The disclosure of the present disclosure is not limited to the technical solution formed by the specific combination of the described technical features. At the same time, it should also cover other technical solutions formed by any combination of the described technical features or equivalent features thereof without departing from the described disclosed concept. For example, the above features and technical features having similar functions disclosed in the present disclosure (but not limited thereto) are replaced with each other to form a technical solution.

In addition, while operations are depicted in a particular order, this should not be understood as requiring that the operations be performed in the particular order shown or in sequential order. Multitasking and parallel processing may be advantageous in certain circumstances. Likewise, while several specific implementation details are included in the above discussion, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. On the contrary, the specific features and acts described above are merely exemplary forms of implementing the claims.

## Claims

1. A method for image restoration, comprising:
in response to a selection operation of a user in any region of an image to be restored within an image restoration page, determining a first target region selected by the user;
generating, based on the first target region, a first region associated with the first target region, and displaying a predetermined editing page in the image restoration page;
in response to editing content input by the user in the editing page, editing the first region based on the editing content to obtain a second region;
performing, based on the second region, an image restoration operation on the image to be restored.

2. The method of claim 1, wherein determining the first target region selected by the user in response to the selection operation of the user in any region of the image to be restored within the image restoration page comprises:
in response to at least one sliding operation of the user on any region of the image to be restored, determining a coverage region corresponding to the sliding operation;
determining the coverage region as the first target region.

3. The method of claim 1 or 2, wherein determining the coverage region corresponding to the sliding operation in response to the at least one sliding operation of the user on any region of the image to be restored comprises:
determining information of a brush size corresponding to the at least one sliding operation;
determining a sliding trajectory corresponding to the sliding operation;
determining the coverage region based on the sliding trajectory and the brush size.

4. The method of claim 1, wherein determining the first target region selected by the user in response to the selection operation of the user in any region of the image to be restored within the image restoration page comprises:
in response to at least one sliding operation of the user on any region of the image to be restored, determining a coverage region corresponding to the sliding operation;
identifying a target object corresponding to a position of the coverage region;
determining a region corresponding to the target object as the first target region.

5. The method of claim 1, wherein determining the first target region selected by the user in response to the selection operation of the user in any region of the image to be restored within the image restoration page comprises:
in response to a trigger operation of the user on any region of the image to be restored, determining a trigger position corresponding to the trigger operation;
identifying a target object corresponding to the trigger position;
determining a region corresponding to the target object as the first target region.

6. The method of any of claims 1 to 5, wherein the editing page comprises at least one editing option;
in response to editing content input by the user in the editing page, editing the first region based on the editing content to obtain a second region comprises:
in response to a trigger operation of the user on any editing option, obtaining editing content input by the user for the editing option;
editing, based on the editing content corresponding to the editing option, the first region to obtain the second region.

7. The method of claim 6, wherein the at least one editing option comprises at least one of: a transparency editing option, a feathering option, or an erasing option.

8. The method of claim 7, wherein if the editing option is the transparency editing option or the feathering option, obtaining the editing content input by the user for the editing option in response to the trigger operation of the user on any editing option comprises:
in response to a trigger operation of the user on the transparency editing option or the feathering option, displaying a parameter adjustment control corresponding to the transparency editing option or the feathering option;
in response to an adjustment operation of the user on the parameter adjustment control, determining a target adjustment parameter, and determining the target adjustment parameter as the editing content corresponding to the editing option;
editing, based on the editing content corresponding to the editing option, the first region to obtain the second region comprises:
performing, based on the target adjustment parameter, transparency adjustment or feathering degree adjustment on the first region to obtain the second region.

9. The method of claim 7, wherein if the editing option is the erasing option, obtaining the editing content input by the user for the editing option in response to the trigger operation of the user on any editing option comprises:
in response to a trigger operation of the user on the erasing option, displaying a predetermined stroke size adjustment control;
obtaining a target stroke size input by the user by triggering the stroke size adjustment control, and obtaining an erasing trajectory triggered by the user in the first region;
determining, based on the target stroke size and the erasing trajectory, a region to be erased and determining the region to be erased as the editing content;
editing, based on the editing content corresponding to the editing option, the first region to obtain the second region comprises:
performing an erasing operation on a position where the first region coincides with the region to be erased, to obtain the second region.

10. The method of any of claims 1 to 5, wherein the editing page comprises a continuing cloning option;
after generating, based on the first target region, the first region associated with the first target region, the method further comprises:
in response to a trigger operation of the user on the continuing cloning option, displaying a region selection page comprising the image to be restored and a predetermined prompt control, and the prompt control is configured for prompting the user to select a target region from the image to be restored;
in response to a selection operation of the user on any region in the image to be restored, determining a second target region selected by the user, and generating a first region associated with the second target region;
determining the first region associated with the first target region and the first region associated with the second target region as a current first region.

11. The method of any of claims 1 to 5, wherein performing, based on the second region, the image restoration operation on the image to be restored comprises:
in response to a movement operation of the user for the second region, moving the second region to a position to be restored in the image to be restored;
placing the second region at the position to be restored, to perform the image restoration operation on the image to be restored.

12. The method of any of claims 1 to 5, wherein before determining the first target region selected by the user in response to the selection operation of the user in any region of the image to be restored within the image restoration page, the method further comprises:
in response to a trigger operation of the user on a predetermined restoration control, jumping to the image restoration page;
displaying, within the image restoration page, the image to be restored and all editable layers associated with the image to be restored.

13. An apparatus for image restoration, comprising:
a determining module, configured for, in response to a selection operation of a user in any region of an image to be restored within an image restoration page, determining a first target region selected by the user;
a processing module, configured for generating, based on the first target region, a first region associated with the first target region, and displaying a predetermined editing page in the image restoration page;
an editing module, configured for, in response to editing content input by the user in the editing page, editing the first region based on the editing content to obtain a second region;
a restoration module, configured for performing, based on the second region, an image restoration operation on the image to be restored.

14. An electronic device, comprising a processor and a memory;
the memory storing a computer executable instruction;
the processor performing the computer executable instruction stored in the memory, which causes the processor to perform the method for image restoration of any of claims 1 to 12.

15. A computer readable storage medium, wherein the computer readable storage medium stores computer executable instructions, when performed by a processor, implementing the method for image restoration of any of claims 1 to 12.

16. A computer program product, comprising a computer program, when performed by a processor, implementing the method for image restoration of any of claims 1 to 12.

17. A computer program, when performed by a processor, implementing the method for image restoration of any of claims 1 to 12.
